# EUROPEAN PATENT APPLICATION

(11) **EP 4 486 010 A1**
(43) Date of publication of application: **01.01.2025**
(21) Application number: 24183305.2
(22) Date of filing: 20.06.2024
(51) Int. Cl.: H04W 36/22, H04W 36/30, H04W 84/12

(54) **AP SWITCHING PARTIALLY CONTROLLED BY THE STA**

(30) Priority: 30.06.2023 JP 2023108516
(71) Applicant: CANON KABUSHIKI KAISHA, Tokyo 146-8501 (JP)
(72) Inventor: OKAMURA, Koji, Tokyo, 146-8501 (JP)
(74) Representative: TBK

(57) **Abstract**

An electronic apparatus (100) includes : a receiving means configured to receive a change request of an access point serving as a connection destination from a wireless LAN access point (101); and a control means configured to, upon receiving the change request, perform control such that connection destination change processing is executed based on the change request when the electronic apparatus (100) is in a first operation state, and perform control such that no response to the change request is given or a change rejection response to the change request is transmitted to the wireless LAN access point (101) when the electronic apparatus (100) is in a second operation state.

## Description

### BACKGROUND OF THE INVENTION

### Field of the Invention

The present invention relates to an electronic apparatus connectable with a wireless LAN, a control method thereof, a program and a computer-readable storage medium storing a program.

### Description of the Related Art

In an extended service set (ESS) constituted by a plurality of access points (AP), there is a technology for dynamically switching a connection destination AP to realize efficient data exchange between an AP and a station (STA). If it is determined that the connection destination AP should be switched based on the congestion of APs to which the STA is connected, availability of other APs, radio wave conditions, and the like, the currently connected AP transmits a request for changing the connected AP, to the STA. Upon receiving the AP change request, the STA switches the connection destination AP in accordance with the request, making it possible to connect to an appropriate AP.

Japanese Patent Laid-Open No. 2021-175068 discloses processing in which a router having an AP function requests a currently connected wireless child device to change the connection destination, as follows. A mobile router (MR 1) that is connectable to a plurality of wireless child devices checks whether or not a wireless child device terminal supports IEEE 802.11v. Whether or not a wireless child device terminal supports IEEE 802.11v can be determined based on an Association Request frame transmitted when the wireless child device terminal wirelessly connects to the MR 1. If the wireless child device terminal supports IEEE 802.11v, the MR 1 transmits a BSS transition management (BTM) Request frame to the corresponding wireless child device terminal. In a BSS Transition Candidate List Entries field of the BTM Request frame, BSSID of a parent router RT 2 is designated as the connection destination. This promotes the wireless child device terminal to switch the connection destination, and the wireless child device terminal switches the connection destination from the MR 1 to the RT 2 in accordance with the received BTM Request frame.

### SUMMARY OF THE INVENTION

The present invention provides an electronic apparatus that changes an access point serving as a connection destination more appropriately, a control method thereof, a program and a computer-readable storage medium storing a program.

The present invention in its first aspect provides an electronic apparatus as specified in claims 1 to 16.

The present invention in its second aspect provides an electronic apparatus control method as specified in claims 17.

The present invention in its third aspect provides a program as specified in claims 18.

The present invention in its fourth aspect provides a non-transitory computer-readable storage medium storing a program as specified in claims 19.

According to the present invention, it is possible to change an access point serving as a connection destination more appropriately.

Further features of the present invention will become apparent from the following description of exemplary embodiments (with reference to the attached drawings).

### BRIEF DESCRIPTION OF THE DRAWINGS

FIG. 1 is a diagram showing a configuration of a system.
FIGS. 2A and 2B are diagrams showing a configuration of an MFP.
FIGS. 3A, 3B, and 3C are diagrams showing an operation display unit of the MFP.
FIGS. 4A and 4B are diagrams showing a configuration of a portable terminal device.
FIG. 5 is a diagram illustrating a configuration of an access point.
FIG. 6 is a sequence diagram illustrating processing based on a connection destination change request from an AP.
FIG. 7A and 7B are a flowchart illustrating processing in the MFP.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

A STA has a state in which no problem occurs even when the STA executes AP switching, and a state in which a problem may occur when the STA executes AP switching or is disconnected from a currently connected AP. If, in the state in which a problem may occur, the STA receives an AP change request from an AP and switches the connection destination AP in response to the request, a problem will occur in the STA.

According to the present disclosure, it is possible to change an access point serving as a connection destination more appropriately.

### (System Configuration)

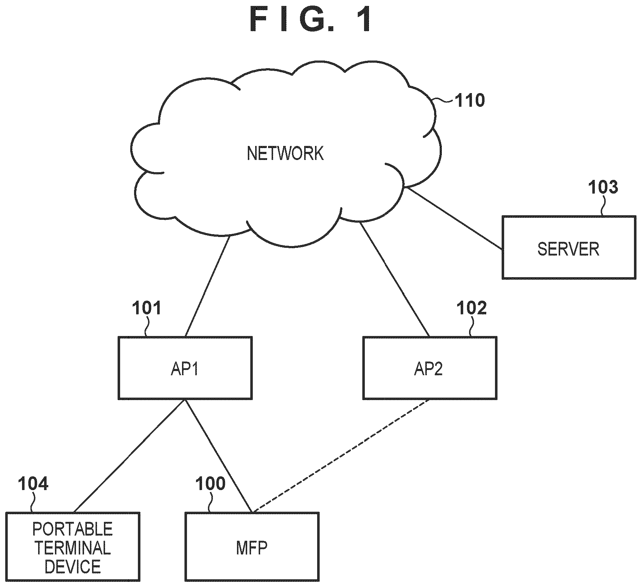

FIG. 1 shows an example of a configuration of a system according to the present embodiment. This system is, in an example, a wireless communication system in which a plurality of communication devices can wirelessly communicate with each other. In the example of FIG. 1, the system includes, as communication devices, a portable terminal device 104, an MFP 100, access points, namely, an AP 101 and an AP 102, a server 103, and a network 110. Note that the AP 101 and the AP 102 may be denoted as "AP1" and "AP2", respectively. The portable terminal device 104 is a device having a wireless communication function using a wireless LAN or the like. Note that, hereinafter, the wireless LAN may be referred to as "WLAN". The portable terminal device 104 may be a personal information terminal such as a personal digital assistant (PDA), a cellphone (smartphone), a digital camera, a personal computer, or the like.

The MFP 100 is a printer device having a print function and may further have a scan function (scanner), a FAX function, and/or a phone function. Also, the MFP 100 of the present embodiment has a communication function of enabling wireless communication with the portable terminal device 104. Also, the present embodiment will describe an example in which the MFP 100 is used, but the some embodiments are not limited to this. Instead of the MFP 100, for example, a device having the communication function, such as a scanner device, a projector, a portable terminal, a smartphone, a note PC, a tablet terminal, a PDA, a digital camera, a music playback device, a television set, and a smart speaker may be used. Note that MFP is an acronym of "Multi Function Peripheral".

The AP 101 is provided separate from (outside) the portable terminal device 104 and the MFP 100, and functions as a base station device for a WLAN. Communication devices having the WLAN communication function can perform communication in a WLAN infrastructure mode via the AP 101. Note that, hereinafter, an access point may be referred to as "AP". Also, an infrastructure mode may be referred to as "wireless infrastructure mode". The AP 101 performs wireless communication with a (authenticated) communication device that is allowed to connect to the AP 101, and relays wireless communication between the authenticated communication device and another communication device. Also, the AP 101 may be connected to, for example, a wired communication network and may relay communication between a communication device connected to this wired communication network and another communication device wirelessly connected to the AP 101.

The AP 102 has the same function as that of the AP 101, and the MFP 100 switches connection from the AP 101 to the AP 102. The server 103 connects to the MFP 100 via the AP 101 and the network 110 and provides services to the MFP 100 in response to a request from the MFP 100. Here, the network 110 may be the so-called Internet, or may be a network or cellphone network that is closed within a company.

### (External Appearance Configuration of MFP)

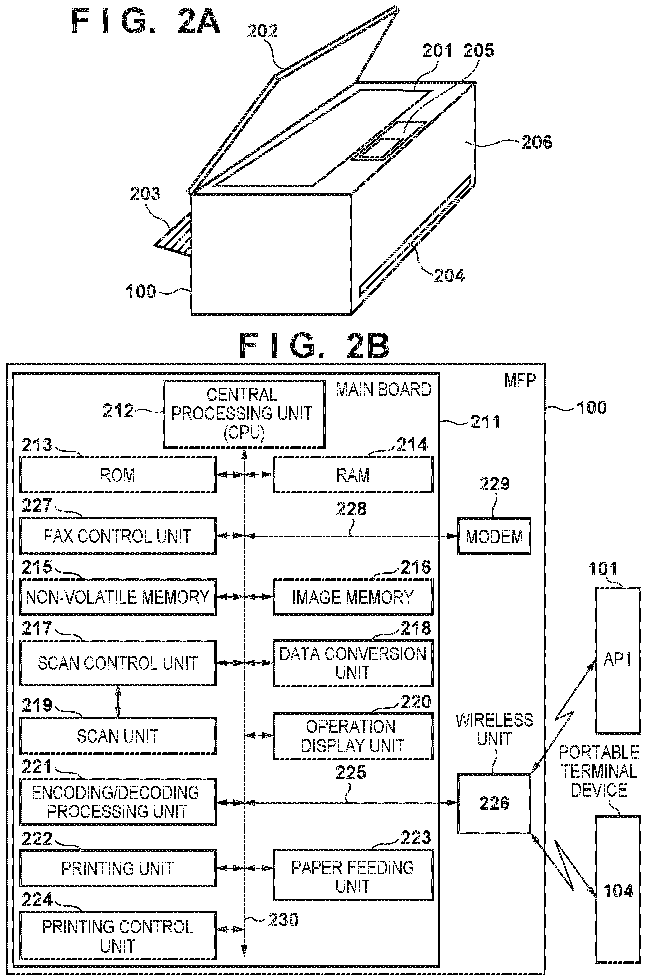

FIG. 2A shows an example of an external appearance configuration of the MFP 100. The MFP 100 includes, for example, a document platform 201, a document lid 202, a print paper insertion port 203, a print paper ejection port 204, and an operation display unit 205. The document platform 201 is a platform on which a scan target document is to be placed. The document lid 202 is a cover that presses a document placed on the document platform 201 or prevents light from a light source for illuminating the document during scanning from leaking outside. The print paper insertion port 203 is an insertion port in which various sizes of paper can be set. The print paper ejection port 204 is an ejection port for ejecting printed paper. Paper set in the print paper insertion port 203 is conveyed one by one to a print unit, where printing is performed, and then the printed paper is ejected from the print paper ejection port 204. The operation display unit 205 includes keys, such as character input keys, cursor keys, decision keys, and cancel keys, as well as LEDs and an LCD, and can accept activation of various functions as the MFP by the user and operation of various settings. Also, the operation display unit 205 may include a touch panel display. The MFP 100 has a wireless communication function with a WLAN and includes a wireless communication antenna 206 for the wireless communication, although the antenna 206 does not need to be externally viewed. The MFP 100, similar to the portable terminal device 104, can also perform wireless communication in the frequency bands of 2.4 GHz and 5 GHz using a WLAN.

### (Configuration of MFP)

FIG. 2B shows an example of a configuration of the MFP 100. The MFP 100 includes a main unit 211 that performs main control on the MFP 100, and a wireless unit 226, which is a communication module that performs WLAN communication using at least one common antenna. The main unit 211 merely indicates a block which includes functional blocks other than a modem 229 and the wireless unit 266. Also, the MFP 100 includes a modem 229 for performing, for example, wired communication. The main unit 211 includes, for example, a central processing unit (CPU) 212, a ROM 213, a RAM 214, a non-volatile memory 215, an image memory 216, a scan control unit 217, a data conversion unit 218, a scan unit 219, and an encoding/decoding processing unit 221. Also, the main unit 211 includes, for example, a print unit 222, a paper feeding unit 223, a print control unit 224, and an operation display unit 220. The functional units inside the main unit 211 are connected to each other via a system bus 230 managed by the CPU 212. Also, the main unit 211 and the wireless unit 226 are connected to each other via, for example, a dedicated bus 225, and the main unit 211 and the modem 229 are connected to each other via, for example, a bus 228.

The CPU 212 is a system control unit including at least one processor and performs overall control on the MFP 100. The later-described processing of the MFP 100 is realized by the CPU 212 executing programs stored in the ROM 213, in an example. Note that dedicated hardware may be provided for each piece of processing. The ROM 213 stores a control program and an embedded OS program that are executed by the CPU 212, and the like. In the present embodiment, the CPU 212 executes the control programs stored in the ROM 213 under the control of the embedded OS also stored in the ROM 213, thereby performing software control, such as scheduling, task switch, and the like.

The RAM 214 is constituted by an SRAM and the like. The RAM 214 stores data such as program control variables, and data such as setting values registered by a user, and management data of the MFP 100. Also, the RAM 214 may be used as a buffer for various works. The non-volatile memory 215 is constituted by, for example, a memory such as a flash memory, and continues to store data even when the MFP 100 is turned off. The image memory 216 is constituted by a memory, such as a DRAM. The image memory 216 stores image data received via the wireless unit 226, image data processed by the encoding/decoding processing unit 221, and the like. Note that the memory configuration of the MFP 100 is not limited to the above-described configuration. The data conversion unit 218, for example, analyzes data in various formats and converts image data into print data.

The scan control unit 217 controls the scan unit 219 (e.g., contact image sensor (CIS)) to optically read a document placed on the document platform 201. The scan control unit 217 converts an image obtained by optically scanning the document into electrical image data (image signals), and outputs the converted image data. At this time, the scan control unit 217 may output image data that has been subjected to various image processing, such as binarization and midtone processing.

The operation display unit 220 corresponds to the operation display unit 205, which has been described with reference to FIG. 2A, and is configured to perform display on a display in accordance with display control performed by the CPU 212 and generate signals in response to an acceptance of a user operation, for example.

The encoding/decoding processing unit 221 performs encoding processing and decoding processing, as well as scaling processing, on image data (such as JPEG and PNG) handled by the MFP 100.

The paper feeding unit 223 holds paper for printing. The paper feeding unit 223 can feed set paper under the control of the print control unit 224. The paper feeding unit 223 may include a plurality of paper feeding units to hold multiple types of paper in one device and may perform control as to from which paper feeding unit paper is to be fed under the control of the print control unit 224.

The print control unit 224 performs various image processing, such as smoothing processing, print density correction processing, and color correction, on image data to be printed, and outputs the processed image data to the print unit 222. The print unit 222 can execute, for example, inkjet-recording printing processing, in which ink supplied from an ink tank is ejected from a print head to record an image on a recording medium, such as paper. Note that the print unit 222 may also be configured to execute another type of printing processing, such as electrophotographic printing processing. Also, the print control unit 224 may read information on the print unit 222 on a regular basis and may update status information stored in the RAM 214, the status information including the amount of ink remaining in the ink tank, the state of the print head, and the like.

The wireless unit 226 is a unit capable of providing the WLAN communication function, and can provide, for example, the same function as the mixture of the wireless unit 226 and a WLAN unit 429 of the portable terminal device 104. That is to say, the wireless unit 226 converts data into a packet compliant with WLAN standards and transmits the resulting packet to another device or decodes a packet from another external device into original data, and outputs the resulting data to the CPU 212. The wireless unit 226 can perform communication as a station compatible with the IEEE 802.11 standard series. Specifically, the wireless unit 226 can perform communication as a station compatible with IEEE 802.11a/b/g/n/ac/ax. Hereinafter, the station may also be referred to as "STA". Also, the wireless unit 226 can perform communication as a STA that supports Wi-Fi Agile Multiband.

The wireless unit 226 supports IEEE 802.11ax, that is, Wi-Fi 6, and the MFP 100 can also operate as a STA that supports orthogonal frequency-division multiple access (OFDMA) and target wake time (TWT). Since the wireless unit 226 supports TWT, the data communication timing from a parent device to the STA is adjusted. The wireless unit 226 (MFP 100), which is the STA, shifts the communication function to a sleep mode when there is no need to wait for signal reception. With this, it is possible to suppress the power consumption. The wireless unit 226 also supports Wi-Fi 6E. That is, communication in the 6 GHz band (5.925 GHz to 7.125 GHz) is also possible. The target band that exists in the 5 GHz band and for which dynamic frequency selection (DFS) is performed does not exist in the 6 GHz band. Therefore, communication in the 6 GHz band is expected to be more comfortable, because no communication disconnection due to DFS waiting time occurs.

Note that the portable terminal device 104 and the MFP 100 can perform P2P (WLAN) communication based on WFD, and the wireless unit 226 has a software access point (soft AP) function or a group owner function. That is to say, the wireless unit 226 can establish a network for P2P communication and can determine a channel to be used in the P2P communication.

### (Operation Display Unit of MFP)

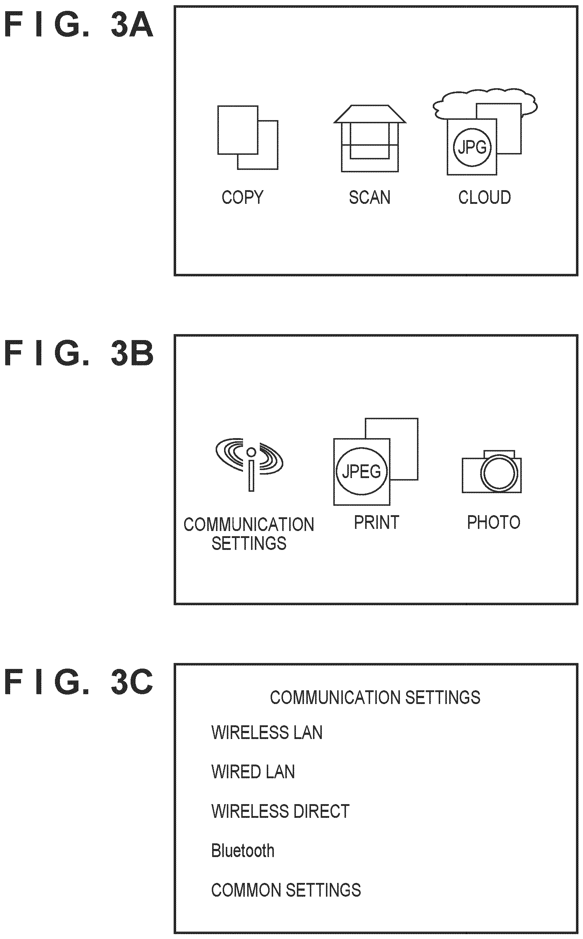

FIGS. 3A to 3C schematically show examples of screen display on a display (touch panel display) included in the operation display unit 220 of the MFP 100. FIG. 3A shows an example of a home screen displayed during a state (idle state or standby state) in which the MFP 100 is turned on but no operation, such as printing or scanning, is being performed. In FIG. 3A, display items (menu items) that respectively correspond to copy, scanning, and cloud are displayed. Cloud is a menu item relating to a cloud function that uses Internet communication. When one of the menu items is selected by a key operation or a touch panel operation, the MFP 100 can start executing the corresponding setting or function. By accepting a key operation or a touch panel operation on the home screen shown in FIG. 3A, the MFP 100 can seamlessly display a screen different from the screen in FIG. 3A.

FIG. 3B shows an example of display of another part of the home screen and shows a screen that transitions from the state of FIG. 3A by an operation (such as a sliding operation to the left or right) to display another page of the home screen. In FIG. 3B, display items (menu items) that respectively correspond to communication settings, printing, and photos are displayed. When one of the menu items is selected, the function that corresponds to the selected menu item, that is, the print function, the photo function, or communication settings is executed.

FIG. 3C shows a display example of a menu screen for communication settings displayed when the communication settings is selected on the screen of FIG. 3B. On the menu screen for communication settings, "wireless LAN", "wired LAN", "wireless direct", "Bluetooth", and "common" are displayed as menu items (options). "Wireless LAN", "wired LAN", and "wireless direct" are menu items used when LAN settings are configured, and from these items, setting of wired connection, setting of enabling/disabling a wireless infrastructure mode, setting of enabling/disabling a P2P mode such as WFD or a soft AP mode, and the like are configured. When the item "wireless LAN" is selected and the wireless LAN is set to enabled by a user operation, the wireless infrastructure mode is enabled. When the item "wireless direct" is selected and the wireless direct is set to enabled by a user operation, the P2P (WLAN) mode is enabled. The common setting menu relating to connection formats is also displayed on this screen. Furthermore, the user can configure, on the screen, settings of a frequency band and a frequency channel for a wireless LAN, and the like.

### (External Appearance Configuration of Portable Terminal Device)

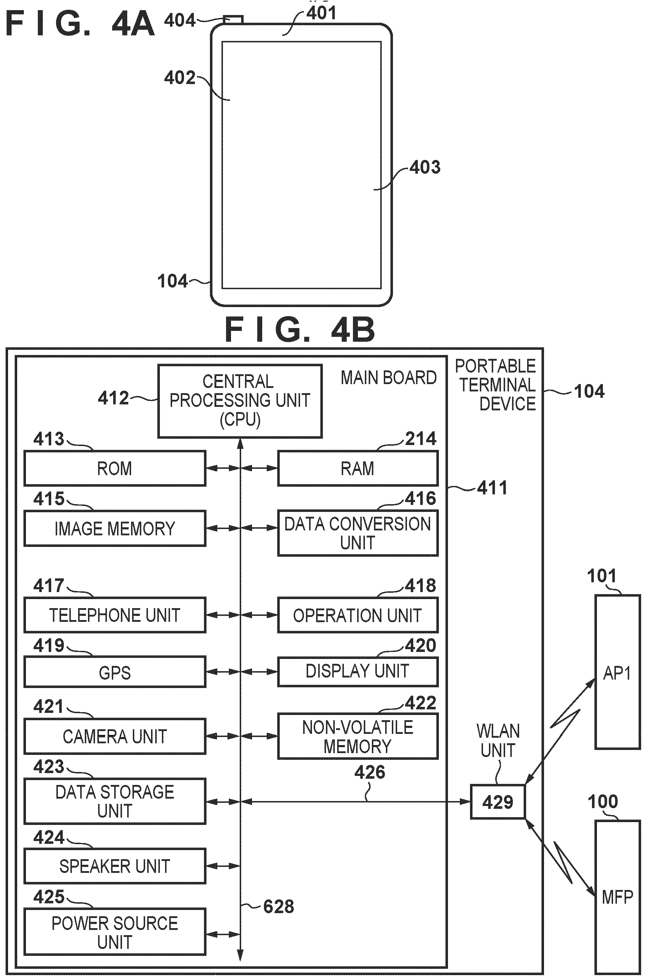

FIG. 4A is a diagram showing an example of an external appearance configuration of the portable terminal device 104. The present embodiment describes, as an example, a case where the portable terminal device 104 is a common type of smartphone. Note that the portable terminal device 104 includes, for example, a display unit 402, an operation unit 403, and a power source key 404. The display unit 402 is a display including, for example, a liquid crystal display (LCD)-type display mechanism. Note that the display unit 402 may display information using, for example, light emitting diodes (LED) or the like. The portable terminal device 104 may also have, in addition to or instead of the display unit 402, a function of outputting information by voice. The operation unit 403 includes physical keys such as keys and buttons, a touch panel, and the like, for detecting user operations. Note that in the present example, since the information display by the display unit 402 and the reception of user operations by the operation unit 403 are performed using a common touch panel display, the display unit 402 and the operation unit 403 are realized by a single device. In this case, button icons and software keyboards are displayed using the display function of the display unit 402, and the user's touch on those areas is detected by the operation reception function by the operation unit 403. Note that a configuration is also possible in which the display unit 402 and the operation unit 403 are separated, and separate pieces of hardware for display and for operation reception are provided. The power source key 404 is a physical key for accepting user operations to turn on or off the portable terminal device 104.

The portable terminal device 104 includes a WLAN unit 401 that provides a WLAN communication function, although it does not necessarily need to be visible in the external appearance. The WLAN unit 401 is configured to be able to execute data (packet) communication in a WLAN system compatible with, for example, IEEE 802.11 standard series (such as IEEE 802.11a/b/g/n/ac/ax). The WLAN unit 401 can also perform communication as an AP supporting Wi-Fi Agile Multiband. However, some embodiments are not limited to this, and the WLAN unit 401 may also be able to execute communication of a WLAN system that is compatible with another standard. Note that in the present example, the WLAN unit 401 can perform communication in both the frequency bands of 2.4 GHz and 5 GHz. Also, the WLAN unit 401 can execute communication based on WFD, communication in the soft AP mode, communication in the wireless infrastructure mode, and the like. Operations in these modes will be described later.

### (Configuration of Portable Terminal Device)

FIG. 4B shows an example of a configuration of the portable terminal device 104. The portable terminal device 104 includes, in an example, a main unit 411 that performs main control on the portable terminal device 104, and a WLAN unit 429 that performs WLAN communication. The main unit 411 includes, for example, a CPU 412, a ROM 413, a RAM 414, an image memory 415, a data conversion unit 416, a phone unit 417, a GPS 419, a camera unit 421, a non-volatile memory 422, a data storage unit 423, a speaker unit 424, and a power source unit 425. Here, "CPU" is an acronym of Central Processing Unit, "ROM" is an acronym of Read Only Memory, "RAM" is an acronym of Random Access Memory, and "GPS" is an acronym of Global Positioning System. The main unit 411 merely indicates a block which includes functional blocks other than a WLAN unit 429. The portable terminal device 104 also includes a display unit 420 and an operation unit 418. The functional units inside the main unit 411 are connected to each other via a system bus 628 managed by the CPU 412. Also, the main unit 411 and the WLAN unit 429 are connected to each other via, for example, a dedicated bus 426.

The CPU 412 is a system control unit that includes at least one processor and performs overall control on the portable terminal device 104. The later-described processing of the portable terminal device 104 is realized by the CPU 412 executing programs stored in the ROM 413, in an example. Note that hardware dedicated for each piece of processing may be provided. The ROM 413 stores a control program and an embedded (OS) program that are executed by the CPU 412, and the like. In the present embodiment, by executing the control programs stored in the ROM 413 under the control of the embedded OS also stored in the ROM 413, the CPU 412 performs software control for scheduling, task switches, and the like.

The RAM 414 is constituted by a static RAM (SRAM) and the like. The RAM 414 stores data such as program control variables, and data such as setting values registered by a user, and management data of the portable terminal device 104. Also, the RAM 414 may be used as a buffer for various works. The image memory 415 is constituted by a memory such as a dynamic RAM (DRAM). The image memory 415 temporarily stores image data received via the WLAN unit 429 and image data read from the data storage unit 423, for processing by the CPU 412. The non-volatile memory 422 is constituted by a memory, such as a flash memory for example, and continues to store data even when the portable terminal device 104 is turned off. Note that the memory configuration of the portable terminal device 104 is not limited to the above-described configuration. For example, the image memory 415 and the RAM 414 may be shared, or data backup and the like may be performed using the data storage unit 423. Also, in the present embodiment, a DRAM is exemplified as the image memory 415, but another storage medium, such as a hard disk or a non-volatile memory, may also be used.

The data conversion unit 416 performs analysis of data in various formats, and data conversion, such as color conversion and image conversion. The phone unit 417 controls the telephone line and processes voice data input and output via the speaker unit 424 to realize telephone communication. The GPS 419 receives radio waves sent out from satellites and obtains position information of the portable terminal device 104, such as the current latitude and longitude.

The camera unit 421 has a function of electronically recording and encoding images input through a lens. Image data obtained by image capture of the camera unit 421 is stored in the data storage unit 423. The speaker unit 424 performs control for realizing the function of inputting or outputting voice for the telephone function and other functions, such as alarm notification. The power source unit 425 is, for example, a portable battery, and performs control for supplying power to the device. The power source state includes, for example, a dead battery state in which no power remains in the battery, a power off state in which the power source key 404 is not pressed, an activated state in which the device is activated, and a power saving state in which the device is activated but the power is saved.

The display unit 420 corresponds to the display unit 402 described with reference to FIG. 4A, and performs display of various input operations, operation state and status of the MFP 100, and the like, based on the control of the CPU 412. The operation unit 418 corresponds to the operation unit 403 described with reference to FIG. 4A, and performs, upon receiving a user operation, control such as generating an electrical signal corresponding to the operation and outputting the generated electrical signal to the CPU 412, for example.

The portable terminal device 104 performs wireless communication using the WLAN unit 429 to communicate data with another device such as the MFP 100. The WLAN unit 429 converts data into a packet and transmits the packet to another device. Also, the WLAN unit 429 decodes a packet from another external device into original data, and outputs the original data to the CPU 412. The WLAN unit 429 is a unit for realizing communication compliant with WLAN standards. The WLAN unit 429 can operate in at least two communication modes, in parallel, including the wireless infrastructure mode and the P2P (WLAN) mode. Note that the frequency bands used in these communication modes may be limited by the function and performance of hardware.

### (Configuration of Access Point)

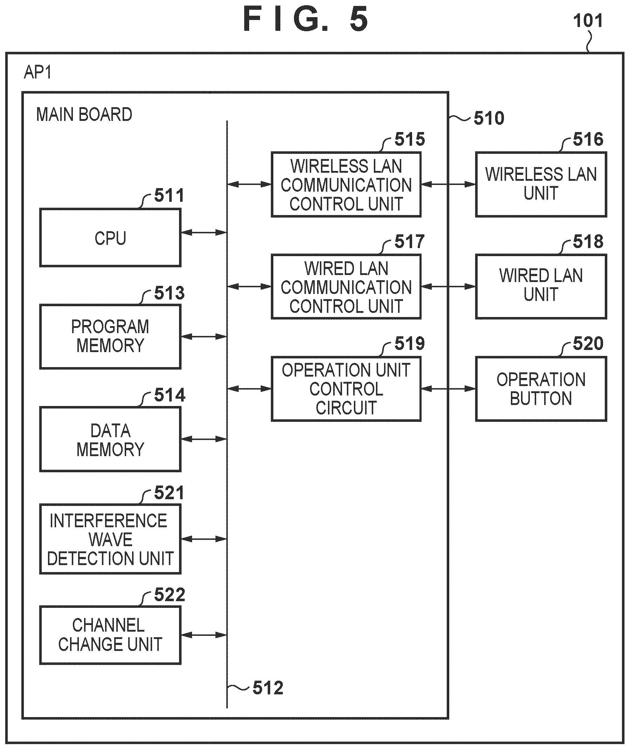

FIG. 5 is a block diagram showing a configuration of the AP 101 having the wireless LAN access point function. The AP 101 includes a main unit 510 that controls the AP 101, a wireless LAN unit 516, a wired LAN unit 518, and an operation button 520. The main unit 510 merely indicates a block which includes functional blocks other than a wireless LAN unit 516, a wired LAN unit 518, and an operation button 520.

The CPU 511 in the form of a microprocessor disposed on the main unit 510 operates in accordance with a control program stored in a program memory 513 in the form of a ROM that is connected to the CPU 511 via an internal bus 512, and the content of a data memory 514 in the form of a RAM. The CPU 511 controls the wireless LAN unit 516 through a wireless LAN communication control unit 515 to perform wireless LAN communication with another communication terminal device. Also, the CPU 511 controls the wired LAN unit 518 through a wired LAN communication control unit 517 to perform wired LAN communication with another communication terminal device. By controlling an operation unit control circuit 519, the CPU 511 can accept a user operation made through the operation button 520. The CPU 511 includes at least one processor.

Also, the AP 101 includes an interference wave detection unit 521 and a channel changing unit 522. The interference wave detection unit 521 performs interference wave detection processing while executing wireless communication in a frequency band in which dynamic frequency selection (DFS) is executed. The channel changing unit 522 performs processing for changing a channel to be used, for example, when an interference wave is detected or when an immediate change to an empty channel is needed while wireless communication is being executed in a frequency band in which DFS is executed.

Note that also the AP 102 has the same configuration as the AP 101.

### (P2P Communication Method)

Subsequently, WLAN communication, namely, a P2P (WLAN) communication method, in which devices directly and wirelessly communicate with each other without any intervention of an external access point, will be described schematically. P2P (WLAN) communication can be realized by a plurality of methods, and for example, communication devices that can support a plurality of modes for P2P (WLAN) communication can selectively use any one of the plurality of modes to execute P2P communication (WLAN).

The following two modes are conceivable as the P2P modes:
- Soft AP mode; and
- Wi-Fi Direct (WFD) mode.

Communication devices that can execute P2P communication may be configured to support at least one of these modes. On the other hand, even a communication device that can execute P2P communication does not need to support all these modes but may be configured to support only some of them.

A communication device (for example, the portable terminal device 104) having the WFD communication function calls, upon accepting a user operation via the operation unit thereof, an application for realizing (in some cases, dedicated for) the communication function. Then, the communication device displays a screen of a user interface (UI) provided by this application to prompt a user operation and based on the user operation accepted in response thereto, the communication device can execute WFD communication.

### - Soft AP Mode

In the soft AP mode, a communication device (for example, the portable terminal device 104) operates in the role of a client that requests various services. Another communication device (for example, the MFP 100) operates as a soft AP capable of performing the function of a WLAN AP by software setting. Note that commands and parameters transmitted and received when establishing a wireless connection between a client and a soft AP need only be those specified in Wi-Fi^{®} standards, and thus descriptions thereof are omitted here. Also, the MFP 100 operating in the soft AP mode determines a frequency band and a frequency channel, as the parent station. Therefore, the MFP 100 can select which frequency band to use from 5 GHz and 2.4 GHz and can select which frequency channel to use among the selected frequency band.

### - WFD Mode

The MFP 100 may be configured to be activated in a fixed manner, as a parent station in the WFD mode (Autonomous Group Owner). In this case, GO Negotiation processing for determining the role is not required. Also, in this case, the MFP 100 determines, as the parent station, a frequency band and a frequency channel. Therefore, the MFP 100 can select which frequency band to use from 5 GHz and 2.4 GHz and select which frequency channel to use among the selected frequency band.

### (Wireless Infrastructure Mode)

In the wireless infrastructure mode, communication devices (for example, the portable terminal device 104 and the MFP 100) that communicate with each other are connected to an external AP (for example, the AP 101) that performs overall control on a network, and communication between the communication devices is executed via this AP. In other words, communication between the communication devices is executed via a network established by an external AP. As a result of the portable terminal device 104 and the MFP 100 detecting an AP 101 and each transmitting a connection request to this AP 101, communication in the wireless infrastructure mode between the communication devices via the AP 101 is possible. Note that a plurality of communication devices may be connected to individual APs. In this case, data transfer between the APs enables communication between the communication devices. Commands and parameters transmitted and received during communication between the communication devices need only be those specified in Wi-Fi standards, and thus descriptions thereof are omitted here. Also, in this case, the AP 101 determines a frequency band and a frequency channel. Therefore, the AP 101 can select which frequency band to use from 5 GHz, 2.4 GHz, and 6 GHz, and can select which frequency channel to use among the selected frequency band.

### (Processing In Response To Connection Destination Change Request From AP to STA)

The portable terminal device 104 and the MFP 100 support functions published as Wi-Fi Agile Multiband^{®}. Wi-Fi Agile Multiband is a function that enables selection of an optimal environment according to the changing condition of a Wi-Fi network. Specifically, an STA, such as the portable terminal device 104 and the MFP 100, and an AP, such as the AP 101, exchange information relating to the network environment using the communication standards of IEEE 802.11 series. With such information exchange, if congestion exists in the network, the AP can guide the STA to another AP, frequency band, or channel, or even another cellular service in some cases (the AP can cause the STA to change the connection destination).

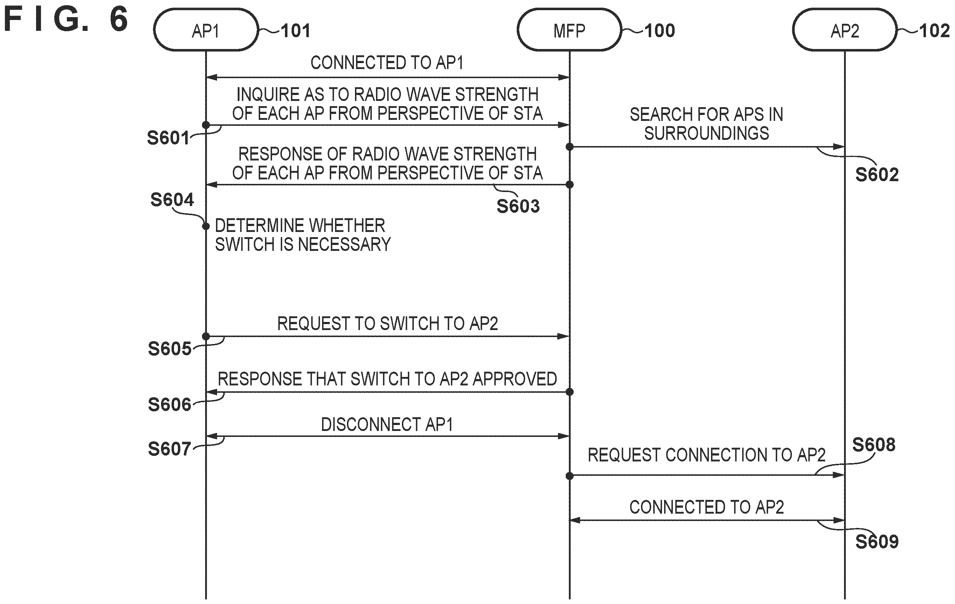

FIG. 6 is a sequence diagram when the MFP 100 changes the connection destination AP from the AP 101 to the AP 102 in response to a connection destination change request (a change request of an access point serving as a connection destination) from the AP 101. The processing executed by each of the devices in this sequence is realized by the CPU of the device reading, onto the RAM, various programs stored in the memory, such as the ROM included in the device, and executing it.

It is assumed that, in the initial state of the processing in FIG. 6, the MFP 100 has established a connection with the AP 101 in the wireless infrastructure mode. It is also assumed that when the MFP 100 has connected to the AP 101 in the wireless infrastructure mode, the AP 101 has acquired information as to whether or not the MFP 100 supports IEEE 802.11v, and when having acquired information indicating that the MFP 100 supports IEEE 802.11v, the AP 101 executes the following processing.

In step S601, the AP 101 transmits, to the MFP 100, an inquiry about (measurement request of) the radio wave strengths of APs located in the surroundings of the MFP 100. The inquiry can be transmitted together with, for example, a beacon frame request or a beacon report request. That is to say, the request can use the mechanism specified by the IEEE 802.11k standard.

In step S602, the MFP 100 receives frames transmitted by the APs located in the surroundings thereof and measures the radio wave strengths of the APs, in response to the request received in step S601. With this, the radio wave strengths of the plurality of APs including the AP 101 and the AP 102 are measured.

In step S603, the MFP 100 transmits a list of the radio wave strengths of the APs located in the surroundings of the MFP 100, measured in step S602, as a response to the request received in step S601. Note that, in addition to or instead of the information measured in step S602, the radio wave strength to be responded may be information stored, for example, in the RAM 214 and the non-volatile memory 215 of the MFP 100. The response is transmitted together with a beacon report or measurement reports, for example.

In step S604, the AP 101 determines whether or not switching the connection destination of the MFP 100 is required based on the congestion situation in the network that the AP101 recognizes, and the radio wave strengths received from the MFP 100 in step S603. Factors based on which the AP 101 determines that switching the connection destination is required include: many connection STAs, large amount of communication, other APs that are less congested, presence or absence of interference signals, disabled AP function, and the like. If it is determined that switching the connection destination of the MFP 100 is required, and the SSID, channel, and frequency band of another AP designated as a switching destination of the MFP 100 are determined, the procedure advances to step S605.

In step S605, the AP 101 transmits an AP change request (connection destination switching request) to the MFP 100. The connection destination switching request includes information relating to the SSID, channel, and frequency band of the other AP designated as the switching destination of the MFP 100 that were determined in step S604. Note that there may be cases where a plurality of SSID are designated. The connection destination change request is transmitted as, for example, a BTM Request. That is, a BSS transition management (BTM) Request frame specified by IEEE 802. 11v standards is transmitted. In the example of FIG. 6, it is assumed that the AP 102 is designated as the switching destination included in the connection destination change request.

In step S606, if the MFP 100 complies with the connection destination change request received in step S605, the MFP 100 transmits a response that indicates an approval of switching to the AP 101. If the MFP 100 does not comply with the connection destination change request, the MFP 100 may transmit a refusal to switching as a response. The response is transmitted as a BTM Response. In the example of FIG. 6, it is assumed that a response indicating an approval of switching is transmitted.

In step S607, the AP 101 and the MFP 100 are disconnected from each other in the wireless infrastructure mode.

In step S608, the MFP 100 transmits, to the AP 102, a connection request that requests that the AP 102 designated by the connection destination change request received in step S605 connect to the MFP 100.

With this, in step S609, the connection of the MFP 100 and the AP 102 in the wireless infrastructure mode is established.

Through this mechanism, the MFP 100, which is the STA, can change the connection destination from the AP 101 to the AP 102 based on the connection destination change request from the AP 101 to which the MFP 100 was originally connected. The AP 101 and the AP 102 may be APs that are located at different positions. That is, through the processing in FIG. 6, the MFP 100 can switch the connection destination to another AP located at a position different from the position at which the originally connected AP is located. Also, the original AP and another AP may be APs that support different frequency bands, among a plurality of frequency bands (two or three of 2.4 GHz, 5 GHz, and 6 GHz) provided by the same device. That is, through the processing in FIG. 6, the MFP 100 can switch the frequency band to another frequency band provided by the same device as the originally connected AP. For example, the connection destination can be changed to an AP in 6 GHz band based on the connection destination change request.

Note that the present embodiment describes an example in which a measurement request and a connection destination change request are transmitted from an AP using a mechanism compliant with Wi-Fi Agile Multiband, and the STA responds to these requests, but is not limited to this. The present embodiment is also applicable to a case where the STA responds to the measurement request and the connection destination change request transmitted from the AP using a mechanism different from that in the above-described example, and changes the connection destination AP (switches, deletes, or adds the connection destination AP).

In step S605 in FIG. 6, where the MFP 100 is requested to change the connection destination from the AP 101, the MFP 100 has a state in which no problem occurs even when the MFP 100 changes the connection destination AP, and a state in which a problem may occur as described later when the MFP 100 changes the connection destination AP or is disconnected from a currently connected AP.

In the present embodiment, if the MFP 100 is in the state in which no problem occurs even when it changes the connection destination AP when the MFP 100 receives a connection destination change request from the AP 101, control is performed such that the connection destination AP is changed in response to the change request. On the other hand, if the MFP 100 is in the state in which a problem may occur when it changes the connection destination AP, control is performed such that the MFP 100 does not respond to the change request or gives a response with a rejection of the connection destination change. The following will describe a configuration of such control. With such a configuration, it is possible to change an access point serving as the connection destination based on the operation state of the MFP 100.

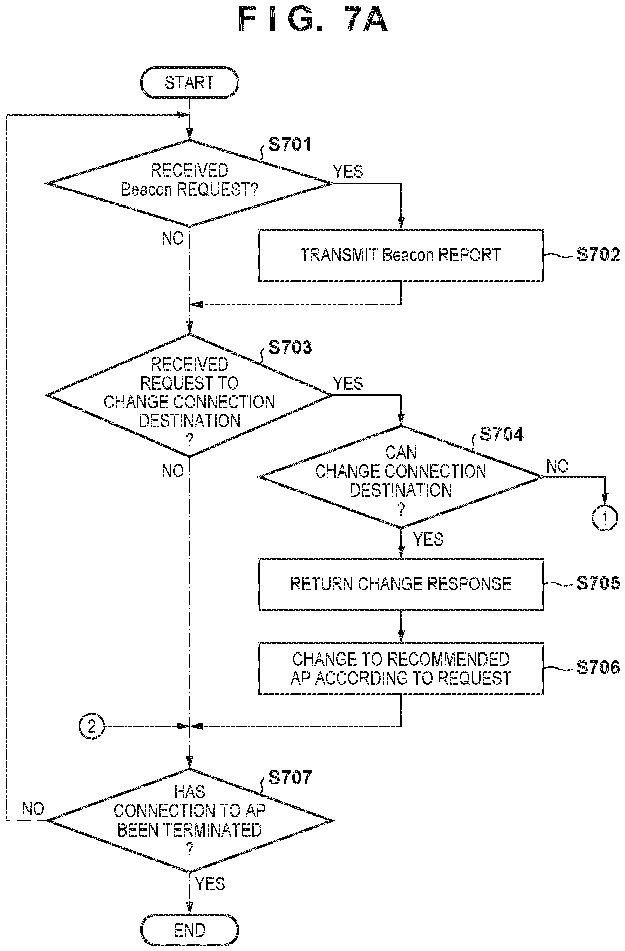

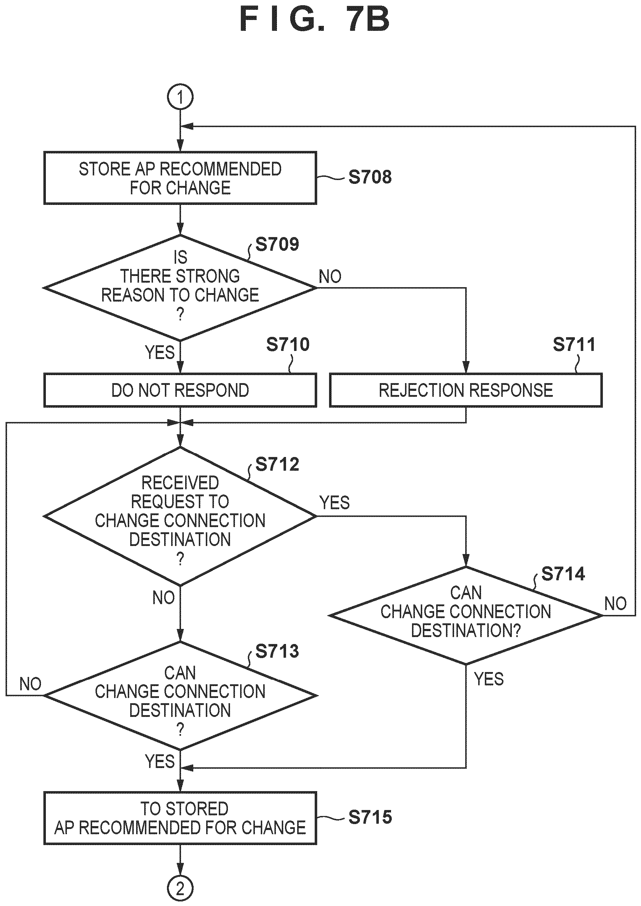

Processing that is executed when a connection destination change request from the currently connected AP is accepted by the MFP 100 is described with reference to FIG. 7A and 7B. The processing shown in FIG. 7A and 7B are realized, for example, by the CPU 212 reading a program stored in the ROM 213, which is a computer-readable recording medium, onto the RAM 214 and executing it.

In the present embodiment, it is assumed that, in the initial state of the processing of FIG. 7A, the MFP 100 has established a connection to the AP 101 in the wireless infrastructure mode. Also, when the MFP 100 connects to the AP 101 in the wireless infrastructure mode, the AP 101 acquires information as to whether or not the MFP 100 supports IEEE 802.11v. Here, if information indicating that the MFP 100 supports IEEE 802.11v (the MFP 100 supports the function of changing a connection destination in accordance with a connection destination change request) is acquired, the following processing will be executed.

In step S701, the CPU 212 determines whether or not an inquiry about (measurement request of) the radio wave strengths of APs located in the surroundings of the MFP 100 has been received from the AP 101. Such an inquiry can contain a beacon frame request or a beacon report request, and in the present embodiment, it is assumed that the inquiry contains one of them. Also, the inquiry about the radio wave strengths determined in step S701 corresponds to processing for determining whether or not the inquiry about the radio wave strengths transmitted by the AP 101 has been received in step S601 in FIG. 6. If it is determined in step S701 that the inquiry about the radio wave strengths has been received, the CPU 212 moves to step S702. On the other hand, if it is determined that the inquiry about the radio wave strengths has not been received, the CPU 212 moves to step S703.

In step S702, the MFP 100 measures the radio wave strengths of APs located in the surroundings of the MFP 100, as described with reference to steps S602 and S603 in FIG. 6. The CPU 212 transmits a list of the radio wave strengths of the APs, as a beacon report, to the AP 101.

In step S703, the CPU 212 determines whether or not a request for changing the connection destination AP has been received from the AP 101, as described with reference to step S605 in FIG. 6. In step S703, if it is determined that the request has been received, the CPU 212 moves to step S704. On the other hand, if it is determined that the request has not been received, the CPU 212 moves to step S707.

In step S704, the CPU 212 determines whether or not the MFP 100 can change the connection destination AP. If it is determined that the MFP 100 cannot change the connection destination AP, the CPU 212 moves to step S708. On the other hand, if it is determined that the MFP 100 can change the connection destination AP, the CPU 212 moves to step S705. That is, in step S704, the CPU 212 determines whether or not the MFP 100 is in a state in which it can change the connection destination AP. Hereinafter, the state in which the MFP 100 can change the connection destination AP is referred to as a "first operation state", and the state in which the MFP 100 cannot change the connection destination AP is referred to as a "second operation state". The second operation state is, for example, a state in which, when the connection destination AP is changed by the MFP 100, the operation currently executed by the MFP 100 is affected.

The determination in step S704 as to whether or not the connection destination AP can be changed may be executed based on whether or not the MFP 100 is connected to the external server 103. While the MFP 100 is connected to the external server 103, if the MFP 100 is immediately disconnected from the AP 101, the communication may be forcibly interrupted without executing termination processing, and reconnection procedure may take time. In other words, when the MFP 100 is not connected to the external server 103, the MFP 100 is in the first operation state, and when the MFP100 is connected to the external server 103, the MFP 100 is in the second operation state. The external server 103 may be, for example, a cloud print server.

In step S705, the CPU 212 transmits, to the AP 101, a response indicating that it will comply with the connection destination change request received from the AP 101 and moves to step S706. The processing in step S705 corresponds to the processing in step S606 in FIG. 6.

In step S706, the CPU 212 disconnects the connection between the MFP 100 and the AP 101 and executes processing for connecting to a AP recommended for connection in the change request. The processing in step S706 corresponds to the processing in steps S607 and S608 in FIG. 6. Note that if the APs recommended for connection in the connection destination change request include an AP that can perform communication in a 6 GHz band, processing for connecting to the AP that can perform communication in a 6 GHz band may be executed. With this, communication disconnection due to the waiting time of DFS as described above does not occur in the MFP 100, and more comfortable communication is expected.

In step S707, the CPU 212 determines whether or not the connection to the connected AP 101 has been terminated. If it is determined that the connection has not been terminated, the CPU 212 moves to step S701. On the other hand, if it is determined that the connection has been terminated, the CPU 212 terminates the processing in FIG. 7A.

In step S708, the CPU 212 stores information on an AP recommended for connection (information on the connection of a recommended AP, including identification information identifying a recommended AP, such as BSSID) in the connection destination change request received from the AP 101 in the RAM 214 of the MFP 100, and moves to step S709.

In step S709, the CPU 212 refers to a change reason included in the connection destination change request received from the AP 101 and determines whether or not there is a strong reason for the change. If it is determined that there is a strong reason, the CPU 212 moves to step S710, and if it is determined that there is no strong reason, the CPU 212 moves to step S711. In step S709, for example, if the Disassociation Imminent bit or the BSS Termination Included bit in the Requestmode of the BTM Request is 1, the CPU 212 determines that the change request has a strong reason for the change.

In step S710, the CPU 212 does not respond to the connection destination change request and moves to step S712. Here, the above-described situation where there is a strong reason is, in other words, a situation in which there is a possibility that the connection between the AP 101 and the MFP 100 is to be disconnected. For example, when the radio wave strengths of the AP 101 and the MFP 100 are low and in similar cases, there is a possibility that the connection between the AP 101 and the MFP 100 is to be disconnected, and thus a strong reason is set for the change reason included in the change request. For example, even when the CPU 212 transmits a change rejection response in the processing in step S709, it is conceivable that the AP 101 forcibly disconnects the connection to the MFP 100 upon receiving the change rejection response. Therefore, if there is a strong reason, the CPU 212 does not respond in step S710, hoping that the connection to the AP 101 can be maintained until waiting time for a response of the AP 101 times out. The waiting time for a response is, for example, a predetermined period of time for which the AP 101 waits for a response from the MFP 100.

In step S711, the CPU 212 transmits, to the AP 101, a change rejection response to the change request from the AP 101 and moves to step S712. Here, the above-described situation where there is no strong reason is, in other words, a situation in which it is recommended to disconnect the connection between the AP 101 and the MFP 100. For example, when a plurality of devices are connected to the AP 101 and in similar cases, the network of the AP 101 may be congested. In the processing in step S711, it is conceivable that, for example, even when the CPU 212 transmits a change rejection response to the AP 101, the AP 101 having received the change rejection response does not forcibly disconnect the connection to the MFP 100. Therefore, in the processing in step S711, if there is no strong reason, the AP 101 can maintain the connection to the AP 101 without forcibly disconnecting the connection, and thus the CPU 212 transmits a change rejection response. For example, by the CPU 212 transmitting a change rejection response, it can be expected that the AP 101 has a lower priority of changing the connection destination of the MFP 100, among a plurality of devices that are connected to the AP 101 and are candidates for connection destination change where there is not a strong reason that would require a forced disconnection. Therefore, it is conceivable that the MFP 100 can maintain the connection to the AP 101 if, for example, a device other than the MFP 100 that has a higher priority changes its connection destination. In other words, in step S710 or S711, the CPU 212 performs control such that when the MFP 100 is in the second operation state, connection destination change processing based on a connection request from the AP 101 is not executed.

In step S712, the CPU 212 determines whether or not a request for changing the connection destination AP has been received again from the AP 101. In step S712, if it is determined that such a request has not been received, the CPU 212 moves to step S713, and if it is determined that such a request has been received, the CPU 212 moves to step S715.

In step S713, the CPU 212 determines whether or not the MFP 100 has entered a state in which it can change the connection destination AP. If it is determined that the MFP 100 has entered the state in which it can change the connection destination AP (that is, the state of the MFP 100 transitions from the second operation state to the first operation state), the CPU 212 moves to step S715, and if it is determined that the MFP 100 remains in the state in which it cannot change the connection destination AP (that is, the MFP 100 remains in the second operation state), the CPU 212 moves to step S712.

The processing in step S714 is the same as the processing in step S713, and thus a description thereof is omitted. In step S714, if it is determined that the MFP 100 has entered the state in which it can change the connection destination AP, the CPU 212 moves to step S715. On the other hand, if it is determined that the MFP 100 remains in the state in which it cannot change the connection destination AP, the CPU 212 moves to step S708, where the information on the AP recommended for connection is updated on the RAM 214.

In step S715, the CPU 212 changes the connection destination to the AP indicated by the information on the AP recommended for connection stored in step S708 and moves to step S707. As the processing for changing the connection destination AP, the same processing as in steps S607, S608, and S609 in FIG. 6 is executed. In other words, in step S715, at the timing at which the state of the MFP 100 has transitioned from the second operation state to the first operation state, the MFP 100 changes the connection destination to an AP recommended for the change indicated by the connection destination change request received in the past when the MFP 100 was in the second operation state, even when the MFP 100 has not received any connection destination change request since the MFP 100 has entered the first operation state. With this measure, the MFP 100 can immediately change the connection destination to an AP with which the MFP 100 can expect to have a more stable connection state as soon as the MFP 100 can change the connection destination AP, and the MFP 100 can enter in a stable connection state.

In step S713 or S714, if it is determined by the CPU 212 that the MFP 100 has entered the state in which it can change the connection destination AP, the CPU 212 may also give a response indicating that the MFP 100 can change the connection destination AP to the AP1. The response indicating that the MFP 100 can change the connection destination AP is, in other words, a response indicating an approval of switching of the connection destination AP.

According to the present embodiment, thus, when the MFP 100 is requested to change the connection destination AP from the AP 101, control is performed such that the connection destination AP is changed in response to the request from the AP 101 or the request from the AP 101 is not responded, depending on the operation state of the MFP 100. That is, when the MFP 100 has received a request for changing the connection destination AP, the MFP 100 can continue the connection to the AP 101 as long as possible, by not transmitting a response if the connection may be forcibly disconnected and transmitting a rejection response if it is recommended to change the connection destination AP. Also, even after the MFP 100 has been controlled not to respond to a request from the AP 101, the MFP 100 can switch the connection destination to the AP recommended for connection when the MFP 100 enters the state in which it can change the operation state of the MFP 100. Accordingly, it is possible to appropriately change the AP serving as a connection destination, according to the operation state of the MFP 100.

The present embodiment has described an example in which, when a Beacon request is received in step S701, the CPU 212 transmits a Beacon report to the AP 101 in step S702, but some embodiments are not limited to this. For example, the processing in step S702 may be controlled such that, if it is determined in step S704 that the MFP 100 cannot change the connection destination for example, the CPU 212 does not transmit a Beacon report to the AP 101 even upon receiving a Beacon request. That is, the MFP 100 may be configured not to transmit a Beacon report if it repeatedly receives Beacon requests when it is in the second operation state. Also, the MFP 100 may perform control such that, if a Beacon request is received when the MFP 100 is in the second operation state, the MFP 100 responds (gives a pseudo-response) with information indicating that the states of the received radio waves of APs other than the currently connected AP are inferior to those of the actually measured radio waves (weak radio waves, high noise, no radio waves detected). With this measure, it is expected that a request to change the connection destination to another AP from the currently connected AP will be suppressed. Accordingly, it is suppressed that the connection destination is changed in response to a connection destination change request.

The present embodiment has described, as an example, a case where in the processing in step S704, the first operation state is a state in which the MFP 100 is not connected to the external server 103, and the second operation state is a state in which the MFP 100 is connected to the external server 103, but some embodiments are not limited to this. For example, the first operation state may be a case where the MFP 100 is in a normal power state, and the second operation state may be a case where the MFP 100 is in a power saving state with less power consumed than in the normal power state. That is, the determination in the processing in step S704 may be performed based on the power state of the MFP 100. A power saving mode refers to, for example, an operation state in which the processor of the MFP 100 has a clock frequency lower than in the normal power state. Thus, since the processing of step S704 is executed based on the power state of the MFP 100, if, for example, the MFP 100 has a low clock frequency due to the power saving mode, it may not be possible to switch the connection destination AP in response to a connection destination change request from the AP 101. Therefore, a configuration is also possible in which the first operation state is a state in which the MFP 100 is in the normal power state, and the second operation state is a state in which the MFP 100 is in the power saving state with less power consumed than in the normal power state.

Also, the processing in step S704 may be executed in response to the print operation of the MFP 100. In step S704, for example, the first operation state may be a state in which the MFP 100 has not received any print data, and the second operation state may be a state in which a portion of the print data has been received from another device and the reception of the remaining print data has not been completed. With this, while the MFP 100 is receiving print data from another device such as the portable terminal device 104 or the server 103, the MFP 100 does not respond to a change request from the AP 101 or responds with a rejection. Accordingly, it is possible to avoid adverse effects on the MFP 100 such as uneven printing occurring due to intermittent print data during printing caused by a change in the connection destination AP.

In the present embodiment, when there is a strong reason for the change in the change request, the CPU 212 does not respond to the AP101 in step S710. Also, an example has been described in which when there is no strong reason for the change in the change request, the CPU 212 responds to the AP 101 with a rejection in step S711, but some embodiments are not limited to this. For example, when there is a strong reason for the change in the change request, the CPU 212 may transmit a response with a rejection to the AP 101 in step S710. Also, when there is no strong reason for the change in the change request, the CPU 212 may not respond to the AP 101 in step S711.

Also, the present embodiment has described an example in which if it is determined in step S704 that the connection destination cannot be changed, the CPU 212 executes the processing in steps S708 to S715, but some embodiments are not limited to this. For example, upon determining that the change of the connection destination is not possible in step S704 or upon determining that there is a strong reason in step S709, the CPU 212 may start processing for resolving the factors for which the change of the connection destination is not possible. For example, if the connection destination AP cannot be changed because the MFP 100 is communicating with the external server 103, the CPU 212 may start processing for terminating the communication with the external server 103. This will increase the probability that, even if the connection is forcibly disconnected from the AP 101, the MFP 100 will enter the state in which it can change the connection destination AP before the connection is forcibly disconnected.

The forgoing various controls described as being performed by the MFP 100 may be performed by a single piece of hardware, or by multiple pieces of hardware (for example, multiple processors or circuits) may share processing to control the entire device.

In the above-described embodiments, the case where the present disclosure is applied to the MFP 100 was taken as an example, but some embodiments are not limited to this example and is applicable to any wireless device that functions as a STA capable of performing processing based on a connection destination change request from an AP. In other words, the present disclosure is applicable to personal computers, PDAs, tablet terminals, cellphone terminals such as smartphones, music players, game machines, e-book readers, smart watches, and various measurement devices (sensor devices), such as thermometers and hygrometers. The present disclosure is also applicable to digital cameras (including still cameras, video cameras, network cameras, and security cameras), printers, scanners, and drones. The present disclosure is also applicable to video output devices, audio output devices (e.g., smart speakers), media streaming players, and wireless LAN child devices (adapters) that can be connected to USB terminals or LAN cable terminals. Video output devices include, for example, a device that acquires (downloads) video on the Internet identified by a URL instructed from an electronic apparatus and outputs it to a display device connected via a video output terminal, such as HDMI^{®}, thereby realizing streaming playback on the display device and realizing mirroring display (display in which the content displayed on an electronic apparatus is also displayed on a display device). Video output devices also include media players, such as televisions, hard disk recorders, Blu-ray recorders, and DVD recorders, head-mounted displays, projectors, televisions, display devices (monitors), and signage devices. The present disclosure is also applicable to Wi-Fi connectable devices, that is, so-called smart home appliances, such as air conditioners, refrigerators, washing machines, vacuum cleaners, ovens, microwave ovens, lighting fixtures, heating devices, and cooling devices.

### Other Embodiments

Embodiment(s) of the present invention can also be realized by a computer of a system or apparatus that reads out and executes computer-executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer-executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer-executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. An electronic apparatus (100) comprising:
a receiving means configured to receive a change request of an access point serving as a connection destination from a wireless LAN access point (101); and
a control means configured to, upon receiving the change request, perform control such that connection destination change processing is executed based on the change request when the electronic apparatus (100) is in a first operation state, and perform control such that no response to the change request is given or a change rejection response to the change request is transmitted to the wireless LAN access point (101) when the electronic apparatus (100) is in a second operation state.

2. The electronic apparatus (100) according to claim 1,
wherein the control means performs control such that the connection destination change processing is not executed based on the change request when the electronic apparatus (100) is in the second operation state.

3. The electronic apparatus (100) according to claim 1 or 2,
wherein, when the electronic apparatus (100) has transitioned from the second operation state to the first operation state, the control unit performs control such that the connection destination change processing is executed based on the change request.

4. The electronic apparatus (100) according to any one of claims 1 to 3, further comprising
a storage means configured to store the change request received by the receiving unit when the electronic apparatus (100) is in the second operation state,
wherein, when the electronic apparatus (100) has transitioned from the second operation state to the first operation state, the control means performs control such that the connection destination change processing is executed based on the change request stored in the storage means.

5. The electronic apparatus (100) according to any one of claims 1 to 4,
wherein, when the electronic apparatus (100) is in the second operation state, the control means performs control such that no response to the change request is given, and when the electronic apparatus (100) has transitioned from the second operation state to the first operation state, the control means performs control such that a response indicating that it is possible to change a connection destination is transmitted to the wireless LAN access point (101).

6. The electronic apparatus (100) according to any one of claims 1 to 5,
wherein, when the electronic apparatus (100) is in the second operation state, the control means switches to perform control such that no response to the change request is given or perform control such that a change rejection response to the change request is transmitted to the wireless LAN access point (101), based on a change reason included in the change request.

7. The electronic apparatus (100) according to claim 6,
wherein, if the change reason indicates a situation in which there is a possibility that a connection between the wireless LAN access point (101) and the electronic apparatus (100) is to be disconnected, the control means performs control such that no response to the change request is given.

8. The electronic apparatus (100) according to claim 6 or 7,
wherein, if the change reason indicates the situation in which there is a possibility that a connection between the wireless LAN access point (101) and the electronic apparatus (100) is to be disconnected, the control means performs control such that no response to the change request is given until waiting time for a response to the change request at the wireless LAN access point (101) times out.

9. The electronic apparatus (100) according to any one of claims 6 to 8,
wherein, if the change reason indicates a situation in which it is recommended to disconnect a connection between the wireless LAN access point (101) and the electronic apparatus (100), the control means performs control such that a change rejection response to the change request is transmitted.

10. The electronic apparatus (100) according to any one of claims 1 to 9, further comprising:
a second receiving means configured to receive a measurement request for measuring radio wave strengths of wireless LAN access points (101, 102) located in the surroundings of the electronic apparatus (100), from a currently connected wireless LAN access point (101); and
a transmitting means configured to transmit a measurement report about the measured radio wave strengths in response to the measurement request received by the second receiving means,
wherein the transmitting means transmits the measurement report when the electronic apparatus (100) is in the first operation state and the transmitting means does not transmit the measurement report when the electronic apparatus (100) is in the second operation state.

11. The electronic apparatus (100) according to any one of claims 1 to 10,
wherein the second operation state is a state in which the electronic apparatus (100) is communicating with an external server.

12. The electronic apparatus (100) according to any one of claims 1 to 10, further comprising
a print means configured to receive print data from another apparatus in a network via the wireless LAN access point (101) and perform printing,
wherein the first operation state is a state in which the print data has not been received, and
the second operation state is a state in which a portion of the print data has been received from the other apparatus and the reception of the remaining print data has not been completed.

13. The electronic apparatus (100) according to any one of claims 1 to 10, further comprising
a processor,
wherein the second operation state is a state in which the processor has a clock frequency lower than in the first operation state.

14. The electronic apparatus (100) according to any one of claims 1 to 13,
wherein the electronic apparatus (100) is a printer.

15. The electronic apparatus (100) according to any one of claims 1 to 14,
wherein the electronic apparatus (100) is at least one of
an apparatus capable of performing an operation compatible with at least one of orthogonal frequency-division multiple access (OFDMA) and target wake time (TWT), and an apparatus capable of performing an operation compatible with IEEE 802.11ax.

16. The electronic apparatus (100) according to any one of claims 1 to 15,
wherein, when performing control such that a connection destination is changed based on the change request, the control means performs control such that the connection destination is changed to a wireless LAN access point (102) whose frequency band is a 6GHz band.

17. An electronic apparatus (100) control method executed in an electronic apparatus (100) comprising:
receiving a change request of an access point serving as a connection destination from a wireless LAN access point (101); and
upon receiving the change request, performing control such that connection destination change processing is executed based on the change request when the electronic apparatus (100) is in a first operation state, and performing control such that no response to the change request is given or a change rejection response to the change request is transmitted to the wireless LAN access point (101) when the electronic apparatus (100) is in a second operation state.

18. A program which when loaded into a computer and executed allows the computer to function as the electronic apparatus as claimed in any one of claims 1 to 16.

19. A non-transitory computer-readable storage medium storing a program which when loaded into a computer and executed allows the computer to function as the electronic apparatus as claimed in any one of claims 1 to 16.
